# EUROPEAN PATENT APPLICATION

(11) **EP 4 640 401 A1**
(43) Date of publication of application: **29.10.2025**
(21) Application number: 22969336.1
(22) Date of filing: 23.12.2022
(51) Int. Cl.: B29C 45/17, B29C 45/07, B29C 45/76

(54) **AUTOMATIC MOLD REPLACEMENT SYSTEM AND METHOD FOR SHOE COMPONENTS**

(71) Applicant: Comtech Chemical Co., Ltd., Gimhae-si, Gyeongsangnam-do 50827 (KR)
(72) Inventor: LIM, Byoungmun, Gimhae-si, Gyeongsangnam-do 50827 (KR); LIM, Daehwi, Gimhae-si, Gyeongsangnam-do 50827 (KR); BONG, Kyoung Ho, Gimhae-si, Gyeongsangnam-do 50827 (KR); HAN, Ji Hun, Gimhae-si, Gyeongsangnam-do 50827 (KR); KWON, Min Ji, Gimhae-si, Gyeongsangnam-do 50827 (KR); BAEK, Seung Myung, Gimhae-si, Gyeongsangnam-do 50827 (KR)
(74) Representative: Maiwald GmbH
(86) International application number: PCT/KR2022/021201
(87) International publication number: WO 2024/135902

(57) **Abstract**

An automatic mold replacement system for shoe components is provided. The automatic mold replacement system for shoe components includes a plurality of molds that have independently assigned bits, forming mold cavities of various models and sizes to manufacture shoe components in various models and sizes; a rack that accommodates the molds in independent seating jigs; an injector that selects a mold from among the molds and proceeds with injection into the mold inserted into a turntable; and a robot that interacts with the injector to extract the mold matching the bit from the injector and seat the mold in a seating jig of the rack or remove the mold matching the bit from the seating jig of the rack and insert the mold into the injector.

## Description

### Technical Field

The present invention relates to a shoe component mold automatic replacement system and method, more specifically, relates to a shoe component mold automatic replacement system and method capable of conducting production without limitations on model or size.

### Background

As is well known, injection molding is used for footwear components. Using a mold, an injection molding machine performs injection molding on footwear components, such as shoe soles or uppers.

For example, an injection molding system distributes a polymer melt into the cavity of a mold, and then forms the polymer product by solidifying the polymer melt in the shape of the mold cavity and extracting it. Among these polymer products are footwear components such as shoe soles made of foam.

This injection molding system produces shoe components limited to specific models and sizes. Consequently, it is difficult for such an injection molding system to respond effectively to diverse consumer demands, such as a wide variety of products in both small and large quantities.

### Detailed Description of the Invention

### Technical Problem

A shoe component mold automatic replacement system that enables the production of a wide variety of products in both small and large quantities is provided, thereby improving productivity. Also, a shoe component mold automatic replacement system, by which the use of a robot reduces mold replacement time and cost while meeting diverse consumer demands, is provided, thereby further enhancing productivity. Furthermore, a method for automatically replacing shoe component molds using this system is provided.

### Technical Solution

A mold automatic replacement system for shoe components according to an embodiment of the present invention includes a plurality of molds that have independently assigned bits, forming mold cavities of various models and sizes to manufacture shoe components in various models and sizes; a rack that accommodates the molds in independent seating jigs; an injector that selects a mold from among the molds and proceeds with injection into the mold inserted into a turntable; and a robot that interacts with the injector to extract the mold matching the bit from the injector and seat the mold in a seating jig of the rack or remove the mold matching the bit from the seating jig of the rack and insert the mold into the injector.

The injector may include a mode switching unit that switches to a semi-automatic mode or automatic mode to proceed with injection sequentially on the molds; a turntable control unit that controls the rotation or stop of the turntable; and a mold control unit that locks or unlocks the molds inserted into or extracted from the turntable.

The robot may include a storage unit that matches and stores the position and information of the mold in the rack through a control program; a fork that transports the mold; and a control unit that confirms the home position and sends a signal to the turntable control unit indicating that the turntable can be operated.

The mold may include a pair of engaging parts that engage with the seating jig; a body part provided between the pair of engaging parts; a seating hole provided on a lower surface of the body part and coupled to a mold seating bolt provided on the seating jig; and a coupling hole provided on the lower surface of the body part inside the seating hole and coupled to a mold fixing bolt provided on the fork of the robot.

The seating jig may include a load support part that supports the load of the mold seated by being coupled to the seating bolt provided on the seating jig; a bottom part that is provided in the height direction on both sides of the load support part; and a detection sensor that detects a lower surface of the mold being seated and provided on the bottom part.

A method for automatically replacing molds for shoe components according to an embodiment of the present invention includes a first step where a control unit of the robot switches to a ready state according to the control of a mode switching unit of a injector; a second step where the control unit of the robot confirms a home position and delivers a signal to a turntable control unit of the injector indicating that the turntable of the injector can be operated; a third step where the turntable control unit receives a safety area signal of the turntable and rotates the turntable; a fourth step where the turntable control unit completes a rotation of the turntable and the mold control unit of the injector releases the mold lock at the designated place; a fifth step where the mold control unit delivers a signal indicating that the mold can be extracted from the turntable and the corresponding bit of the extracted mold to a storage unit of the robot after releasing the mold lock; a sixth step where the storage unit confirms the bit received from the mold control unit, moves the mold with the released lock to the rack by the robot, delivers a completion signal to the mold control unit, the mold control unit delivers the bit of the mold to be inserted into the turntable, the storage unit confirms the bit received from the mold control unit, recognizes which mold it is through the program, finds the mold matching the bit signal according to the input of the mold replacement mode through the mold control unit, inserts the mold into the turntable with a fork of the robot, and delivers a completion signal to the turntable control unit when mold insertion is completed; and a seventh step where the turntable control unit controls to the third step after the mold lock of the mold control unit, and the control unit of the robot controls to the first step.

The replacement mode of the mold in the sixth step may include a first mode for replacing molds between the seating jig of the rack and the turntable of the injector; and a second mode for replacing molds between the seating jig of the rack and the seating jig of another rack.

The rack may further include a replacement rack, and the replacement mode of the mold in the sixth step may further include a third mode for replacing molds between the seating jig of the replacement rack and the turntable of the injector.

The first mode of the sixth step may include a sixty-first step where the storage unit confirms the bit received from the mold control unit, recognizes which mold it is through the program, and seats the extracted mold with the fork of the robot in the empty seating jig of the rack; a sixty-second step where the fork delivers a signal to the mold control unit indicating that the extraction process of all molds is completed when the mold is seated in the seating jig; a sixty-third step where the mold control unit delivers a signal indicating that mold insertion is possible and the bit for the mold number to be inserted to the storage unit of the robot; and a sixty-fourth step where the storage unit finds the mold matching the bit signal, inserts the mold into the turntable, and delivers a completion signal to the turntable control unit when mold insertion is completed.

The sixth step may further include a sixty-fifth step following the sixty-fourth step, where the mold control unit checks once more whether the mold lock has been released to prevent accidents.

In the sixth step, the mold may be seated from an empty seating jig of the rack with the latest number position.

### Effect of Invention

As such, one embodiment of the present invention allows a robot to interact with an injector by extracting a mold corresponding to a bit from the turntable of the injector according to the bit signal sent from the injector, and placing it on the seating jig of a rack. Alternatively, it removes the mold from the seating jig of a rack and inserts it into the injector's turntable. This enables the production of various shoe components without being restricted by model and size.

### Brief description of the drawings

FIG. 1 is a block diagram of an automatic mold replacement system for shoe components according to an embodiment of the present invention.
FIG. 2 is a schematic plan view of the automatic mold replacement system for shoe components of FIG. 1.
FIG. 3 is a perspective view of the rack of the system of FIG. 2 provided with a seating jig.
FIG. 4 is a perspective view of the seating jig of FIG. 3.
FIG. 5 is a perspective view of the mold used in the system of FIG. 2.
FIG. 6 is an exploded perspective view of the mold of FIG. 5 and the seating jig of FIG. 4.
FIG. 7 is a perspective view showing the fork mounted on the robot of the system of FIG. 2.
FIG. 8 is an exploded perspective view of the mold of FIG. 5 and the fork of FIG. 7.
FIG. 9 is a flowchart of the automatic mold replacement method for shoe components according to an embodiment of the present invention.
FIG. 10 is a detailed flowchart of the first mode in sixth step of FIG. 9.

### Best form for practicing the invention

Hereinafter, with reference to the attached drawings, the embodiments of the present invention will be described in detail so that those skilled in the art to which the present invention pertains can easily implement them. However, the present invention can be embodied in various different forms and is not limited to the embodiments described herein. In the drawings, parts unrelated to the description have been omitted to clearly explain the present invention, and the same reference numerals have been assigned to the same or similar components throughout the specification.

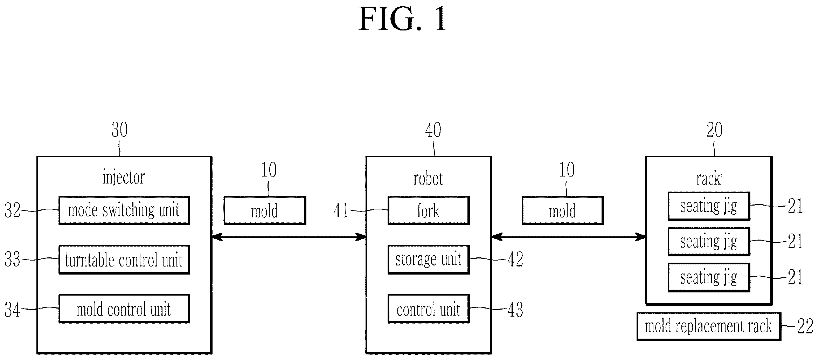

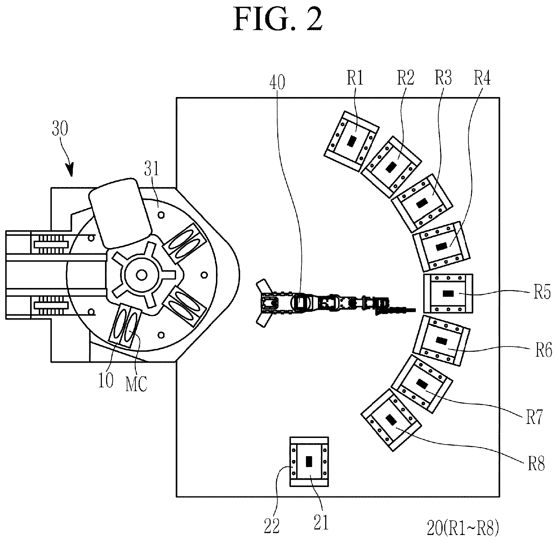

FIG. 1 is a block diagram of an automatic mold replacement system for shoe components according to an embodiment of the present invention, and FIG. 2 is a schematic plan view of the automatic mold replacement system for shoe components of FIG. 1. Referring to FIG.s 1 and 2, the automatic mold replacement system for shoe components (hereinafter referred to as "replacement system") includes a plurality of molds 10, a plurality of racks 20, an injector 30, and a robot 40.

A plurality of molds 10 form mold cavities MC of various models and sizes to manufacture shoe components in different models and sizes. The mold cavity MC is configured to inject shoe soles or uppers. The mold 10 is assigned a bit independently. The bit assigns a specific number to the designated mold 10, which can be changed, and the robot 40 can verify mold information through the bit.

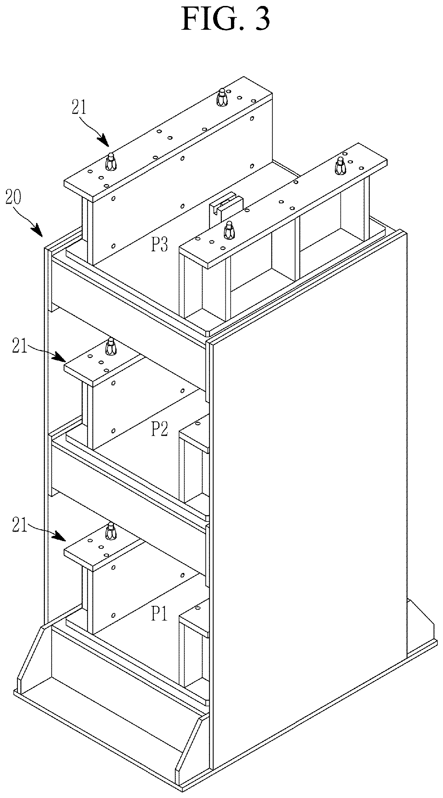

FIG. 3 is a perspective view of the rack of the system in FIG. 2 equipped with a seating jig. Referring to FIG.s 1 to 3, the racks 20 are provided in multiples and are arranged in an arc shape that rotates along the rotational radius of the robot 40, centering on the robot 40.

Each rack 20 is equipped with seating jigs 21 that independently secure multiple molds 10, and is designed to accommodate and support a mold 10 on the seating jig 21. Referring to FIGs 2 and 3, one rack 20 is structured in three tiers, with each tier having a seating jig 21, allowing it to support three molds 10.

**[Table 1]**

| | 1st rack (R1) | 2nd rack (R2) | 3rd rack (R3) | 4th rack (R4) | 5th rack (R5) | 6th rack (R6) | 7th rack (R7) | 8th rack (R8) |
|---|---|---|---|---|---|---|---|---|
| 3^{rd} floor | 3rd position (P3) | P6 | P9 | P12 | P15 | P18 | P21 | P24 |
| 2^{nd} floor | 2nd position (P2) | P5 | P8 | P11 | P14 | P17 | P20 | P23 |
| 1^{st} floor | 1 st position (P1) | P4 | P7 | P10 | P13 | P16 | P19 | P22 |

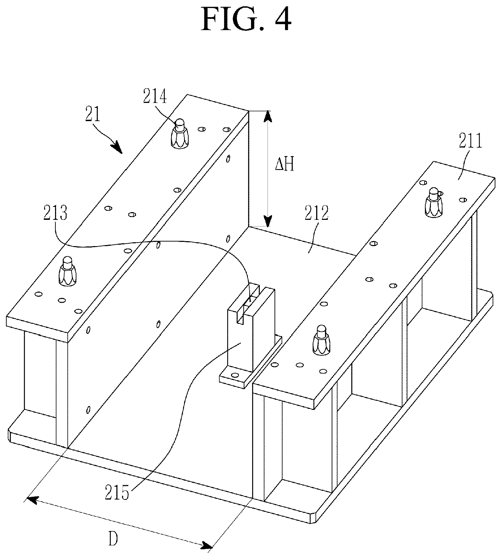

The rack 20 includes a first rack R1 to an eighth rack R8. Each of the first rack R1 to the eighth rack R8 is equipped with first to third floors. The first rack R1 includes the first position P1, the second position P2, and the third position P3 from the first to the third floor. Similarly, the second rack R2 to the eighth rack R8 sequentially include the fourth position P4 to the twenty-fourth position P24. In this case, up to 23 molds 10 can be stored, and one seating jig 21 is empty to store the mold 10 taken out from the injector 30. FIG. 4 is a perspective view of the seating jig in FIG. 3. Referring to FIGs. 3 and 4, the seating jig 21 includes a load support part 211, a bottom part 212, and a detection sensor 213. The load support part 211 is equipped with and is coupled to a mounting bolt 214 to support a load of the mounted mold 10.

The bottom part 212 is provided with load support parts 211 on both sides in the height direction. In other words, the load support parts 211 are provided on both sides of the bottom part 212. The height difference ΔH between the bottom part 212 and the top of the load support parts 211, as well as the spacing D of the load support parts 211, allows for the removal and settlement of the mold 10.

The detection sensor 213 is provided on the bottom part 212 to detect the lower surface of the mold 10 that is seated. Based on the detection signal from the detection sensor 213, the robot 40 determines whether the mold 10 has been seated on the seating jig 21, whether it has been removed to be empty, or whether it is seated properly. The detection sensor 213 is installed on a setting member 215 erected on the bottom part 212 and can detect the lower surface of the seated mold 10 from a closer position.

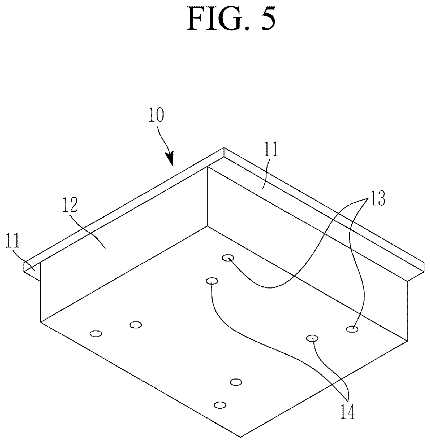

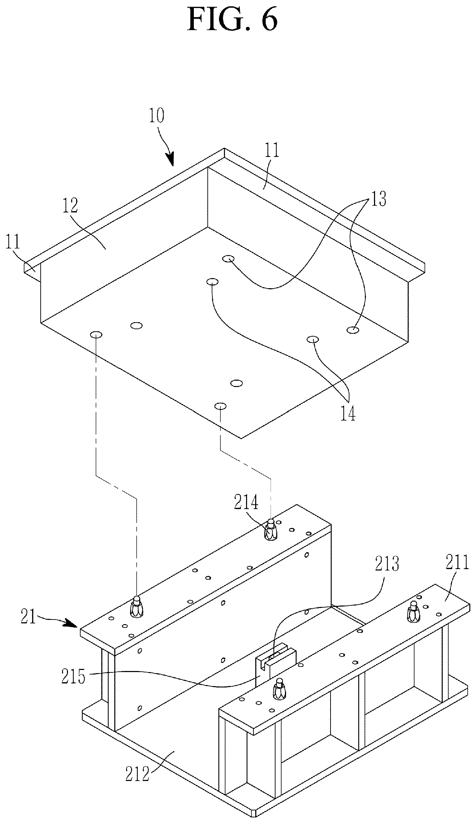

FIG. 5 is a perspective view of the mold used in the system of FIG. 2, and FIG. 6 is a perspective view of the disassembled mold of FIG. 5 and the seating jig of FIG. 4. Referring to FIGs. 4 to 6, the mold 10 includes a pair of engaging parts 11 that hang on the seating jig 21, a body part 12, a seating hole 13, and a coupling hole 14.

The body part 12 is provided between a pair of engaging parts 11 and is equipped with a mold cavity MC (see FIG. 2) on its upper surface. The engaging parts 11 are formed on both sides of the upper end of the body part 12 and are supported by the load supporting part 211 of the seating jig 21.

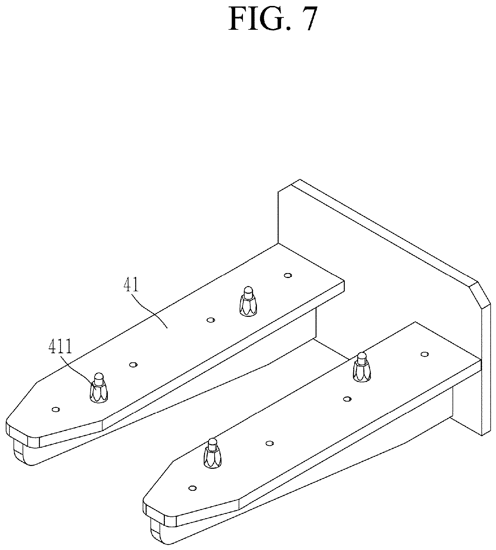

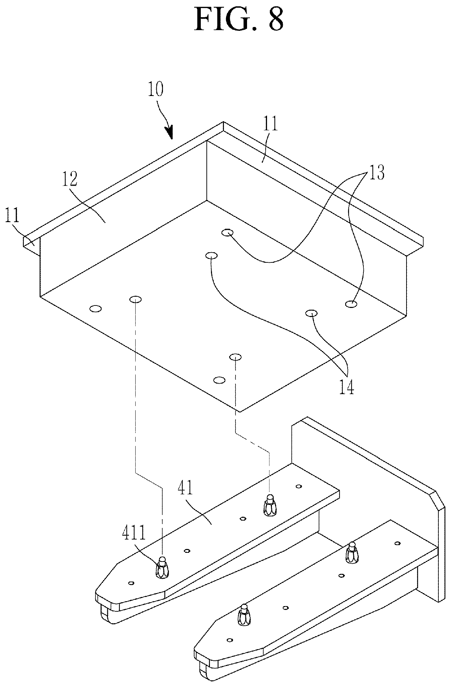

FIG. 7 is a perspective view showing the fork mounted on the robot of the system in FIG. 2, and FIG. 8 is a perspective view disassembling the mold of FIG. 5 and the fork of FIG. 7. Referring to FIGs. 5, 7, and 8, the seating hole 13 is provided on the lower surface of the body part 12 and is coupled to the mold seating bolt 214 provided on the seating jig 21.

The coupling hole 14 is provided on the lower surface of the body part 12 inside the seating hole 13 and is coupled to the mold fixing bolt 411 provided on the fork 41 of the robot 40. The fork 41 is inserted into the space formed by the height difference ΔH and distance D of the seating jig 21 to remove and seat the mold 10.

At this time, the fork 41 is inserted on both sides of the detection sensor 213 to remove and place the mold 10, so it does not interfere with the detection operation of the detection sensor 213. In other words, when placing the mold 10 on the seating jig 21 or removing the mold 10 from the seating jig 21, the detection sensor 213 can reliably detect whether or not the mold 10 is present on the seating jig 21.

Referring again to FIG. 1, the rack 20 may further include a replacement rack 22. The replacement rack 22 can be arranged on an arc that rotates along the rotation radius of the robot 40. The replacement rack 22 is also provided with a seating jig 21 of the same structure as the seating jig 21 provided in the rack 20.

The seating jig 21 of the replacement rack 22 is used for replacing the mold 10 between the turntable 31 of the injector 30. The replacement rack 22 facilitates the removal and insertion of the mold 10 when exporting the seated mold 10 to the outside or importing an external mold into this replacement system.

Referring again to FIGs. 1 and 2, the injector 30 is configured to proceed with injection into the molds 10 that are selected and inserted into the turntable 31. For example, the injector 30 includes a mode switching unit 32, a turntable control unit 33, and a mold control unit 34.

The mode switching unit 32 can switch to semi-automatic mode or automatic mode to sequentially perform injection on the molds 10 and can initiate the operation of the replacement system. The turntable control unit 33 controls the rotation or stopping of the turntable 31 in semi-automatic mode or automatic mode.

The mold control unit 34 locks or unlocks the mold 10 that is inserted into and withdrawn from the turntable 31. That is, the mold control unit 34 controls the mold lock when the mold 10 is in the inserted state on the turntable 31, and controls the mold lock release to withdraw the mold 10 from the turntable 31.

The robot 40 interacts with the injector 30 to extract the mold 10 corresponding to the bit from the injector 30 according to the bit signal sent from the injector 30 and place it on the seating jig 21 of the rack 20, or remove the mold 10 corresponding to the bit from the seating jig 21 of the rack 20 and insert it into the injector 30.

That is, the robot 40 interacts with the injector 30 by responding to the bit signals sent from the mold control unit 34 of the injector 30 to the control unit 43 of the robot 40. According to these bit signals, the robot uses a fork 41 to either withdraw a mold 10 that matches the bit from the turntable 31 of the injector 30 and place it onto the seating jig 21 of the rack 20, or remove a mold 10 that matches the bit from the seating jig 21 of the rack 20 and insert it into the turntable 31 of the injector 30.

For this purpose, for example, the robot 40 includes a fork 41, a storage unit 42, and a control unit 43. The fork 41 is configured to transport the mold 10 and is mounted on the arm of the robot 40. The storage unit 42 stores the unique number of the mold 10 and the information of the mold 10 by matching them with each other through a control program.

The control unit 43 confirms a home position of the robot 40, specifically the fork 41, and sends a signal to the turntable control unit 33 indicating that it is permissible to operate the turntable 31. The interaction between the robot 40 and the injector 30 can be seen as the interaction between the control unit 43 of the robot 40 and the mode switching unit 32 of the injector 30, the turntable control unit 33, and the mold control unit 34.

Below, the method of automatic mold replacement using the automatic mold replacement system for shoe components in one embodiment will be described.

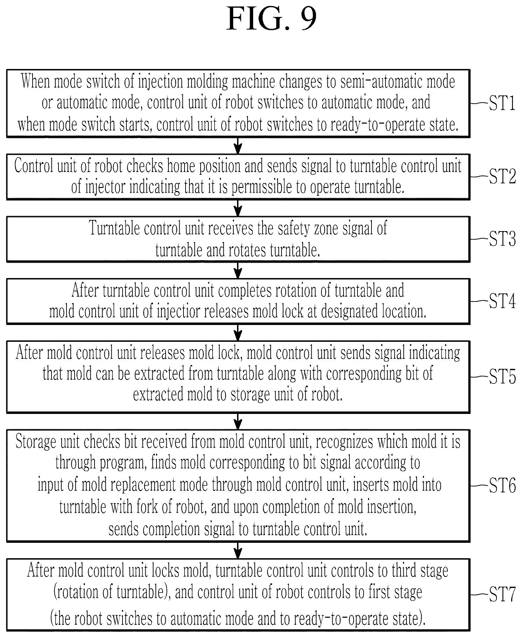

FIG. 9 is a flowchart of the automatic mold replacement method for shoe components according to an embodiment of the present invention. Referring to FIG. 9, the automatic mold replacement method for shoe components includes the first step ST1, the second step ST2, the third step ST3, the fourth step ST4, the fifth step ST5, the sixth step ST6, and the seventh step ST7.

The first step ST1 involves the control unit 43 of the robot 40 switching to a ready-to-operate state under the control of the mode switching unit 32 of the injector 30. The second step ST2 is where the control unit 43 of the robot 40 confirms the home position and sends a signal to the turntable control unit 33 of the injector 30 indicating that it is permissible to operate the turntable. The third step ST3 is when the turntable control unit 33 receives the safety zone signal of the turntable 31 and rotates the turntable 31.

The fourth step ST4 involves the turntable control unit 33 completing the rotation of the turntable 31, and the mold control unit 34 of the injector 30 releasing the mold lock at a designated location. This designated location is fixed as the position where the extraction and insertion of the mold 10 takes place. Although not shown, the release of the mold lock can be achieved by operating the air cylinder of the locking clamp that is coupled to the mold 10, thereby releasing the lock between the molds 10 on the turntable 31.

The fifth step ST5 involves the mold control unit 34 signaling that the mold 10 can be removed from the turntable 31 after the mold lock is released, and transmitting the corresponding bit of the mold 10 being removed to the storage unit 42 of the robot 40.

The sixth step ST6 involves the storage unit 42 checking the bits received from the mold control unit 34, and after the robot 40 moves the mold 10, which has been released, to the rack 20, a completion signal is sent to the mold control unit 34. The mold control unit 34 then transmits the bits of the mold 10 that needs to be inserted into the turntable 31.

The sixth step ST6 involves the storage unit 42 checking the bits received from the mold control unit 34, recognizing which mold it is through the program, and finding the mold 10 that matches the bit signal according to the input of the mold replacement mode via the mold control unit 34. It then inserts the mold 10 into the turntable 31 with the fork 41 of the robot 40. Once the mold insertion is complete, it sends a completion signal to the turntable control unit 33.

In the sixth step ST6, the robot 40 checks the received bits, recognizes which mold it is through the program, and moves the mold 10 to the seating jig 21 of the empty rack 20 for placement. At this time, the robot 40 places the mold 10 starting from the empty seating jig 21 in the latest numbered position among the empty racks 20.

In addition, in the sixth step ST6, for improving productivity, the mold 10 can be placed starting from the empty seating jig 21 that is closest to the position of the turntable 31 being extracted and inserted among the empty racks 20.

For example, referring to FIGs. 2 and 3, if the seating jigs 21 at the first position P1, third position P3, twenty-third position P23, and twenty-fourth position P24 are empty, the mold 10 is first placed on the seating jig 21 at the twenty-fourth position P24. Therefore, the moving distance between the robot 40 and the injector 30 can be minimized, which can improve the production speed.

The replacement mode of the mold 10 in the sixth step ST6 includes first and second modes. The first mode replaces the mold 10 between the seating jig 21 of the rack 20 and the turntable 31 of the injector 30. The second mode replaces the mold 10 between the seating jig 21 of one rack 20 and the seating jig 21 of another rack 20. The second mode achieves improved productivity by re-adjusting positions of the molds 10 within the rack 20.

The replacement mode of the mold 10 in the sixth step ST6 further includes a third mode. The third mode replaces the mold 10 between the seating jig 21 of the replacement rack 22 and the turntable 31 of the injector 30. The third mode facilitates the removal and introduction of the mold 10 seated on the replacement rack 22 to the outside, or the introduction of an external mold to apply it to this replacement system.

The seventh step ST7 involves the mold control unit 34 locking the mold, after which the turntable control unit 33 controls to the third step ST3, and the control unit 43 of the robot 40 controls to the first step ST1. By repeating the first step ST1 through the seventh step ST7, it is possible to automatically produce shoe components of various models and sizes.

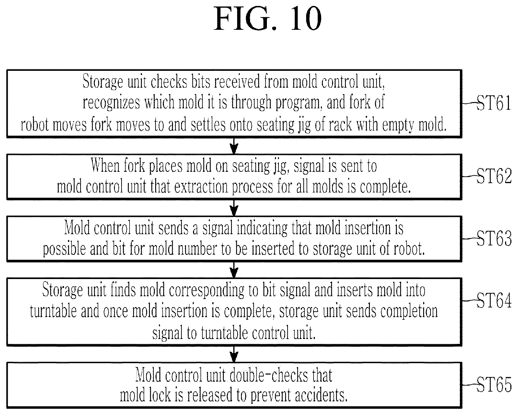

FIG. 10 is a detailed flowchart of the first mode in the sixth step of FIG. 9. Referring to FIGs. 9 and 10, the first mode of the sixth step ST6 is the most common mold 10 replacement mode. In the sixth step ST6, the first mode includes sixty-first step ST61 , sixty-second step ST62, sixty-third step ST63, and sixty-fourth step ST64.

The sixty-first step ST6 involves the storage unit 42 checking the bits received from the mold control unit 34, recognizing which mold it is through the program, and placing the mold 10 extracted by the fork 41 of the robot 40 onto the seating jig 21 of an empty rack 20. The sixty second step ST62 involves the fork 41 signaling to the mold control unit 34 that the extraction process of all molds 10 is complete once the mold 10 is placed onto the seating jig 21. As a result, the mold 10 from the turntable 31 is extracted and placed onto the seating jig 21 of the rack 20.

The sixty-third step ST63 involves the mold control unit 34 sending a signal that the mold 10 can be inserted, along with the bit for the mold number to be inserted, to the storage unit 42 of the robot 40. In the sixty-fourth step ST64, the storage unit 42 locates the mold 10 corresponding to the bit signal and inserts it into the turntable 31 using the fork 41. Once the mold 10 insertion is complete, a completion signal is sent to the turntable control unit 33. As a result, the mold 10 that was seated in the seating jig 21 of the rack 20 is inserted into the turntable 31.

The first mode may further include sixty-fifth step ST65. The sixty-fifth step ST65 follows sixty-fourth step ST64, where the mold control unit 34 checks once more to ensure that the mold lock is released to prevent accidents. In other words, the sixty-fifth step ST65 can enhance the safety of inserting the mold 10 into the turntable 31.

Additionally, in the sixth step ST6, first mode can be applied not only when directly extracting the mold 10 from the turntable 31 of the injector 30 but also in cases where issues arise with the mold 10 mounted on the turntable 31 of the injector 30.

Although preferred embodiments of the present invention have been described above, the invention is not limited to these and can be modified in various ways within the scope of the claims, the description of the invention, and the accompanying drawings, and these modifications also naturally fall within the scope of the present invention.

### [Reference Numerals]

10: mold
11: engaging part
12: body part
13: seating hole
14: coupling hole
20: rack
21: seating jig
22: replacement rack
30: injector
31: turntable
32: mode switching unit
33: turntable control unit
34: mold control unit
40: robot
41: fork
42: storage unit
43: control unit
211: load support unit
212: bottom unit
213: detection sensor
214: seating bolt
215: setting member
411: mold fixing bolt
D: gap
MC: mold cavity
P1~P24: Position 1 to Position 24
R1~R8: Rack 1 to Rack 8
ΔH: height difference

## Claims

1. A mold automatic replacement system for shoe components, comprising:
a plurality of molds that have independently assigned bits, forming mold cavities of various models and sizes to manufacture shoe components in various models and sizes;
a rack that accommodates the molds in independent seating jigs;
an injector that selects a mold from among the molds and proceeds with injection into the mold inserted into a turntable; and
a robot that interacts with the injector to extract the mold matching the bit from the injector and seat the mold in a seating jig of the rack or remove the mold matching the bit from the seating jig of the rack and insert the mold into the injector.

2. The mold automatic replacement system for shoe components according to claim 1, wherein the injector comprises:
a mode switching unit that switches to a semi-automatic mode or automatic mode to proceed with injection sequentially on the molds;
a turntable control unit that controls the rotation or stop of the turntable; and
a mold control unit that locks or unlocks the molds inserted into or extracted from the turntable.

3. The mold automatic replacement system for shoe components according to claim 2, wherein the robot comprises:
a storage unit that matches and stores the position and information of the mold in the rack through a control program;
a fork that transports the mold; and
a control unit that confirms the home position and sends a signal to the turntable control unit indicating that the turntable can be operated.

4. The mold automatic replacement system for shoe components according to claim 1, wherein the mold comprises:
a pair of engaging parts that engage with the seating jig;
a body part provided between the pair of engaging parts;
a seating hole provided on a lower surface of the body part and coupled to a mold seating bolt provided on the seating jig; and
a coupling hole provided on the lower surface of the body part inside the seating hole and coupled to a mold fixing bolt provided on the fork of the robot.

5. The mold automatic replacement system for shoe components according to claim 4, wherein the seating jig comprises:
a load support part that supports the load of the mold seated by being coupled to the seating bolt provided on the seating jig;
a bottom part that is provided in the height direction on both sides of the load support part; and
a detection sensor that detects a lower surface of the mold being seated and provided on the bottom part.

6. A method for automatically replacing molds for shoe components, comprising:
a first step where a control unit of the robot switches to a ready state according to the control of a mode switching unit of a injector;
a second step where the control unit of the robot confirms a home position and delivers a signal to a turntable control unit of the injector indicating that the turntable of the injector can be operated;
a third step where the turntable control unit receives a safety area signal of the turntable and rotates the turntable;
a fourth step where the turntable control unit completes a rotation of the turntable and the mold control unit of the injector releases the mold lock at the designated place;
a fifth step where the mold control unit delivers a signal indicating that the mold can be extracted from the turntable and the corresponding bit of the extracted mold to a storage unit of the robot after releasing the mold lock;
a sixth step where the storage unit confirms the bit received from the mold control unit, moves the mold with the released lock to the rack by the robot, delivers a completion signal to the mold control unit, the mold control unit delivers the bit of the mold to be inserted into the turntable, the storage unit confirms the bit received from the mold control unit, recognizes which mold it is through the program, finds the mold matching the bit signal according to the input of the mold replacement mode through the mold control unit, inserts the mold into the turntable with a fork of the robot, and delivers a completion signal to the turntable control unit when mold insertion is completed; and
a seventh step where the turntable control unit controls to the third step after the mold lock of the mold control unit, and the control unit of the robot controls to the first step.

7. The method for automatically replacing molds for shoe components according to claim 6, wherein the replacement mode of the mold in the sixth step comprises:
a first mode for replacing molds between the seating jig of the rack and the turntable of the injector; and
a second mode for replacing molds between the seating jig of the rack and the seating jig of another rack.

8. The method for automatically replacing molds for shoe components according to claim 7, wherein the rack further comprises a replacement rack, and
wherein the replacement mode of the mold in the sixth step further comprises a third mode for replacing molds between the seating jig of the replacement rack and the turntable of the injector.

9. The method for automatically replacing molds for shoe components according to claim 7, wherein the first mode of the sixth step comprises:
a sixty-first step where the storage unit confirms the bit received from the mold control unit, recognizes which mold it is through the program, and seats the extracted mold with the fork of the robot in the empty seating jig of the rack;
a sixty-second step where the fork delivers a signal to the mold control unit indicating that the extraction process of all molds is completed when the mold is seated in the seating jig;
a sixty-third step where the mold control unit delivers a signal indicating that mold insertion is possible and the bit for the mold number to be inserted to the storage unit of the robot; and
a sixty-fourth step where the storage unit finds the mold matching the bit signal, inserts the mold into the turntable, and delivers a completion signal to the turntable control unit when mold insertion is completed.

10. The method for automatically replacing molds for shoe components according to claim 9, wherein the sixth step further comprises a sixty-fifth step following the sixty-fourth step, where the mold control unit checks once more whether the mold lock has been released to prevent accidents.

11. The method for automatically replacing molds for shoe components according to claim 6, wherein in the sixth step, the mold is seated from an empty seating jig of the rack with the latest number position.
